# EUROPEAN PATENT APPLICATION

(11) **EP 0 753 787 A1**
(43) Date of publication of application: **15.01.1997**
(21) Application number: 96201864.4
(22) Date of filing: 03.07.1996
(51) Int. Cl.: G02F 1/35, H04B 10/18

(54) **Optical unit for processing an optical pulse pattern**

(30) Priority: 05.07.1995 EP 95201833
(71) Applicant: PHILIPS ELECTRONICS N.V., 5621 BA Eindhoven (NL)
(72) Inventor: Liedenbaum, Coen Theodorus Hubertus Fransiscus, 5656 AA Eindhoven (NL)
(74) Representative: Baele, Ingrid Albertina F.M.

(57) **Abstract**

Optical unit (9) for processing a pulse pattern, and an optical transmission system comprising such a unit (9). The unit (9) has an input for receiving a signal pulse series having a modulation period T and means for processing this signal pulse series. The means are constituted by a radiation-controlled optical switch (11) comprising a directional coupler (13) having four ports (15, 17, 19, 21). The first port (15), which forms part of an input of the switch (11), is used for receiving the signal pulse series. The second port (17) forms part of an output of the switch (11), and the third (19) and the fourth port (21) are interconnected by means of a waveguiding structure (23). This structure (23) is provided with a non-linear optical element which is situated in the waveguiding structure at such a position that the intensity of a pulse of the signal pulse series realizes a non-linear behaviour of the intensity transmission characteristic of the switch during a defined time interval t.

## Description

The invention relates to a optical unit for processing a pulse pattern, which unit has an input for receiving a signal pulse series having a modulation period T and means for processing said signal pulse series.

The invention also relates to an optical transmission system and a receiver comprising such a unit.

In the current optical telecommunication systems, the aims are, inter alia, higher transmission rates and increasing transmission lengths of the transmission medium. However, both parameters are limited, inter alia, by the dispersion occurring in the transmission medium and by time jitter.

At high transmission rates, the data pulse series should consist of short optical pulses. Since the pulse width in short pulses decreases, time jitter will have a more detrimental influence than at low transmission rates. Time jitter means that the pulse position is defined inaccurately with respect to the pulse period and occurs due to instabilities in the transmission system, so that a variation of the position of the data pulses along the time axis is caused. As a result of the spread of signal pulses with respect to time caused by this variation, the signal pulse and an associated pulse of the clock signal will not always coincide and give rise to erroneous information in the receiver, particularly at high transmission rates.

Moreover, the width of the propagating pulses generally increases as the transmission distance through the optical fiber increases. A general rule is that faultless detection is no longer possible at a pulse widening of 20%. Pulse widening is due to the fact that the travel time in the optical fiber is different for radiation having different wavelengths. This phenomenon is referred to as dispersion. Since a pulse transmitted by the optical transmitter generally comprises components of different wavelengths, these components will arrive at the receiver at different instants and thus give rise to pulse widening.

As a result of the above-mentioned phenomena, the pulse pattern of the signal pulse series transported through a given distance of the transmission medium no longer corresponds to the pulse pattern of the original signal pulse series. To reduce the detrimental influence of these phenomena on the detection of the transported data signal, the data signal is to be restored in the receiver and/or at regular distances in the transmission medium.

One of the best known manners of restoring a pulse pattern is the use of an electronic regenerator. In this regenerator, the optical data signal is converted by a photodiode into an electric signal after it has covered a distance through the transmission medium. The electric signal is restored electronically and subsequently applied to a diode laser which operates as a transmitter for the next part of the transmission medium. Since pulse series consisting of short optical pulses are difficult to modulate with data in a reliable manner, it is relatively difficult at high transmission rates to operate such regenerators in a reliable manner.

An optical unit of the type described in the opening paragraph, with which a data signal can be restored in an optical manner, is known from, for example, the article: "Bit-rate flexible all-optical demultiplexing using a non-linear optical loop mirror" by D.M. Patrick et al. in the Proceedings of the 19th European Conference on Optical Communication, 12-16 September, 1993, pp. 281-284. The unit described in this article is adapted to demultiplex a data signal and to this end it includes an active element in the form of a NOLM (non-linear optical loop mirror). For the principle of operation of a NOLM which is known per se, reference is made to, for example the article: "Non-Linear Optical Loop Mirror" by N.J. Doran and D. Wood in Optics Letters, Vol. 13, No. 1, January 1988.

The waveguiding structure is constituted by a non-linear optical fiber whose ends are connected together by means of a directional coupler having four ports. A fiber ring is formed in this manner. The data signal to be demultiplexed is applied to, for example the first port of the switch. Moreover, the fiber ring includes an extra coupler via which a control pulse signal is introduced into the waveguiding structure so that the waveguiding structure becomes asymmetrical. During at most the time interval when there is asymmetry in the ring, the switch may be open. The transmission window of the switch is determined by the period of time of the control pulses, by the non-linearity and the dispersion of the optical fiber and by the intensity of the pulses injected in the ring.

Said switch has, however, some drawbacks. The most prominent drawbacks are that the pulse period of the control pulse laser and the modulation period of the data signal must be synchronized with each other, that measures must be taken to distinguish the pulses of the control pulse signal and the pulses of the much weaker data signal at the output port of the switch, and that a relatively long fiber is required to obtain data pulses of sufficient intensity at the output port during the presence of a control pulse in the ring. Moreover, due to dispersion in the fiber, different wavelengths will have a different delay time. This means that, if the wavelengths of the data signal and the control pulse signal are different, in a long fiber, which is required anyway to achieve the desired effect, then a delay time difference will occur between these two signals, which is undesirable.

It is an object of the invention to provide an optical unit for processing a pulse pattern with which an optical pulse pattern can be restored or is formatted in a simple and reliable manner and which comprises relatively simple components.

To this end, the optical unit according to the invention is characterized in that the means are constituted by a radiation-controlled optical switch comprising a directional coupler having four ports, the first port of which forms part of an input of the switch for receiving the signal pulse series, the second port forms part of an output of the switch, and the third and fourth ports are interconnected by means of a waveguiding structure which is provided with a non-linear optical element situated in the waveguiding structure at such a position that the intensity of a pulse of the signal pulse series realises a non-linear behaviour of the intensity transmission characteristic of the switch during a defined time interval t.

The data signal to be processed is applied to the input which forms part of the first port. The data signal is split up into two sub-signals by the directional coupler, for example a 50:50 coupler, which sub-signals will traverse the waveguiding structure in opposite directions. If the structure were symmetrical, the two sub-signals would arrive at the second port after having covered the same optical path length, and interfere destructively.

However, the structure is rendered asymmetrical by providing a non-linear optical element which ensures that the pulses of the signal pulse series cause a non-linear behaviour of the intensity transmission characteristic of the switch as a result of a phase difference between the two sub-signals after they have traversed the structure. When this phase difference is large enough, there will be constructive interference. Consequently, a signal can be measured at the output which forms part of the second port, while the wavelength of this signal is substantially the same as that of the data signal and whose pulses have a width which is mainly determined by the extent of asymmetry caused by the non-linear optical element in the waveguiding structure. This extent of asymmetry is determined by the distance between the non-linear optical element and the center of the waveguiding structure. The center is understood to mean the position in the structure where two sub-pulses, propagating in opposite directions, of a signal pulse cross each other. At a phase difference which is equal to π, the signal measured at the output of the switch is maximal.

In fact, a sample is taken of the data pulses applied to the switch during the period when the switch is open. Consequently, both the width of the pulses generated at the output of the switch and the time jitter will be considerably reduced with respect to the data pulses applied to the switch, provided that the data pulses are not sampled at the edges.

In the optical unit according to the invention, it is consequently no longer necessary to make use of complicated synchronization techniques for synchronizing the data signal with a control pulse signal which is necessary in known units for switching the switch.

A further advantage is that only a single active component is required, namely a current source for driving the non-linear optical element. The optical unit may thus be considered as a passive component.

A further embodiment of the optical unit according to the invention is characterized in that the non-linear optical element is situated at a distance d from the center between the input and the output of the switch, for which it holds that T > t.

The distance with respect to time between the signal pulses (T)is preferably larger than the time interval in which asymmetry occurs in the waveguiding structure (t), i.e. the length of the transmission window of the switch, so as to avoid that more than one data pulse is sampled in the same transmission window.

The non-linear optical element may be, for example an element of a non-linear optical material such as, for example InP or InGaAsP. A preferred embodiment of the optical unit according to the invention is, however, characterized in that the non-linear optical element is a semiconductor laser amplifier.

Since the data signal is generally relatively weak, it is a great advantage that the signal is subjected to an amplification in the switch.

If the waveguiding structure is constituted by an optical fiber and if the non-linear element is a semiconductor laser amplifier, this structure is an improved embodiment of a known TOAD (Terabit Optical Asymmetric Demultiplexer) which is described, for example, in the article "Performance of a 50 Gbit/s Optical Time Domain Multiplexed System Using a Terahertz Optical Asymmetric Demultiplexer" in IEEE Photonics Technology Letters, Vol. 6, No. 1, January 1994, pp. 98-100.

The first sub-pulse arriving at the amplifier will influence the amplifier. Consequently, a disturbance of the charge carrier density is caused so that there is a change of the refractive index. This change of the refractive index leads, inter alia, to a phase change of the radiation propagating through the amplifier. As a result, the second sub-pulse will undergo a phase change so that a phase difference will occur between the two sub-pulses arriving at the second port.

Moreover, the extinction ratio is improved by the switch described hereinbefore. The extinction ratio is the ratio of the light intensity of a digital "1" and the light intensity of a digital "0". The amplification of the data signal by the amplifier is dependent on the intensity of the data signal. At a low intensity of the signal influencing the charge carrier density in the amplifier, the charge carrier density will, however, change to a relatively small extent so that the phase change of the second sub-signal of the same signal pulse will be relatively small. The intensity of the signal appearing at the output of the amplifier will consequently also be relatively low. If the signal for influencing the charge carrier density has a high intensity, the power of the signal generated at the output will stabilize because the amplifier will saturate at a given intensity. In this way, the spontaneous emission can be eliminated because it has a much lower intensity than the data signal.

A further embodiment of the optical unit according to the invention is characterized in that the semiconductor laser amplifier is polarization-insensitive.

An embodiment of such a amplifier is described extensively in, for example, United States Patent US-A 5,151,818 and the non-prepublished Patent Application EP 94203593.2 (PHN 15.120) both in the name of the Applicant. The advantage of the use of such an amplifier is that it is not necessary to use polarization-controlling elements which ensure that the sub-signals interfering with each other have the suitable polarization upon interference at the output of the optical switch.

The optical unit described hereinbefore is particularly suitable for use as a passive regenerator in the receiver and/or in the transmission medium of an optical telecommunication system. The optical unit may also be used as a format converter for converting, for example, an NRZ (non-return-to-zero) pulse series into an RZ (return-to-zero) pulse series.

These and other aspects of the invention will be apparent from and elucidated with reference to the embodiments described hereinafter.

In the drawings:
Fig. 1 shows diagrammatically an embodiment of an optical transmission system;
Fig. 2 shows diagrammatically an embodiment of an optical unit according to the invention;
Fig. 3 shows a data pulse which has covered a distance of 150 km through a transmission medium before (a) and after (b) restoration by means of an optical unit according to the invention; and
Fig. 4 shows a non-return-to-zero pulse series (a) which has been converted into a return-to-zero pulse series (b) by means of an optical unit according to the invention.

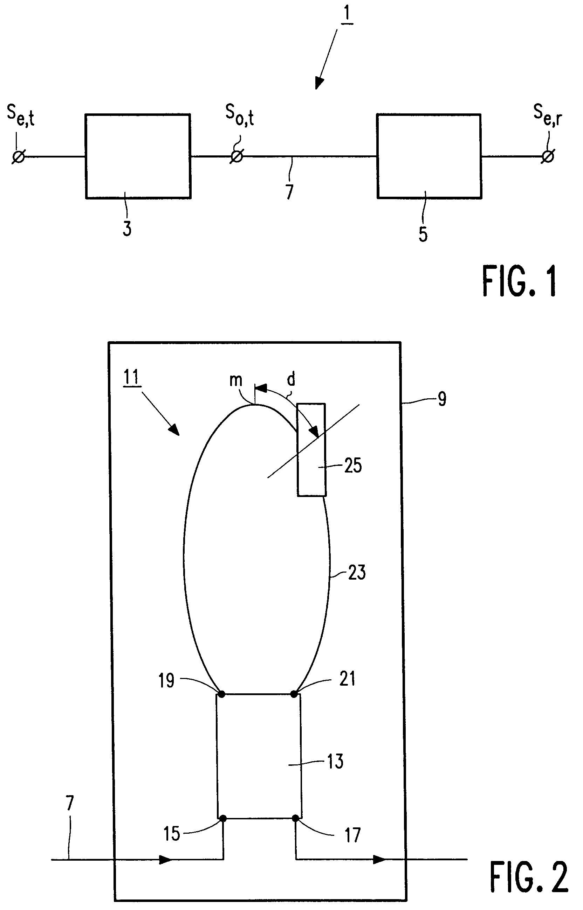

The optical transmission system 1 shown in Fig. 1 comprises an optical transmitter 3 and an optical receiver 5 between which a transmission medium 7 is present, for example, an optical fiber. A data pattern to be transmitted in the form of a digital electric signal S_{e,t} is applied to the optical transmitter 3. This signal is converted in the transmitter 3 into optical pulses S_{o,t}. The output of the transmitter 3 is connected to a input of the transmission medium 7, the output of which is connected to the input of the receiver 5. After transport of the optical pulses through the transmission medium 7, the optical pulses are converted in the receiver 5 into a digital electric signal S_{e,r} which is available at the output of the receiver 5.

When a data signal is transported through long transmission distances, this signal will degrade due to dispersion in the transmission medium, line and system instabilities. After a given distance, the transported data signal will consequently no longer correspond to the original data signal. The present invention proposes an optical unit which can be arranged in the transmission medium 7 and/or in the receiver 5 for restoring the data signal before it is further transported and/or before it is detected. When such a unit is used in a receiver, the data signal which has arrived in the receiver is applied to the unit 9 where it is restored so that upon detection the risk of errors is reduced considerably. The unit is used in the transmission medium for restoring a data signal which has covered a given transmission distance and has degraded, before it is further transported. When a data signal is transported through the currently desirable distances, without being restored several times on its way, too may mistakes will be measured upon detection so that the detected signal no longer corresponds to the originally transmitted signal. The optical unit 9 according to the invention may also be used as a format converter, for example, for converting an NRZ pulse series into an RZ pulse series.

Fig. 2 shows a embodiment of an optical unit according to the invention. The unit 9 has an optical switch 11. The switch 11 comprises a directional coupler 13 having four ports 15, 17, 19 and 21. The first port 15 forms part of an input of the switch 11, the second port 17 forms part of an output of the switch 11, the third port 19 and the fourth port 21 are interconnected by means of a waveguiding structure 23. The waveguiding structure 23 may be an optical fiber made of, for example, glass or synthetic material. The directional coupler 13 may be, for example, a 50:50 coupler.

A signal pulse series having a modulation period T is applied to the first port 15. The directional coupler 13 splits up the pulses of the signal pulse series into two equal sub-pulses which will traverse the waveguiding structure 23 in opposite directions. Without further measures, the two sub-pulses will cover the same optical path length and destructively interfere at the second port 17. All intensity will again appear at the first port 15 of the switch 11. The switch behaves as a mirror. For this reason, a non-linear optical element 25 is present in the structure 23 at a position which is asymmetrical with respect to the center m of the structure 23. The center m of the structure 23 is understood to mean the position where the two sub-pulses propagating in opposite directions cross each other. The waveguiding structure 23 may, or may not consist of optical non-linear material. The asymmetry is caused by the element 25, provided that the non-linear coefficient of the element 25 is larger than that of the material of the structure 23. The element 25 may consist of, for example InP, a polymer or another non-linear optical material. The intensity of the pulses generated at the second port 17 may be attenuated or intensified with respect to the intensity of the pulses of the original signal pulse series, dependent on the nature of the non-linear optical element, but the extinction ratio is at least maintained during sampling of the signal pulse series to be converted.

The non-linear optical element 25 is preferably a semiconductor laser amplifier. If the sub-pulses have a sufficiently large intensity, the sub-pulse which is the first to arrive at the amplifier 25 will influence its charge carrier density, and will be amplified and passed. This change of the charge carrier density will bring about a phase change in the sub-pulse arriving at a later instant and will also amplify and pass this sub-pulse, so that the two sub-pulses will have a phase difference upon arrival at the second port 17 of the switch 11. If this phase difference is large enough, constructive interference will occur at the output and it will be possible to measure the intensity. The value of the phase difference is determined by the asymmetry in the structure 23, in other words, by the distance d of the element 25 with respect to the center m of the structure 23. The signal which is measured at the second port 17 is maximal if the phase difference is equal to π.

If the non-linear optical element is a semiconductor laser amplifier, the length of the waveguiding structure may be reduced considerably so as to bring about the same phase difference between two sub-pulses of a data pulse, as compared with a non-linear optical element which does not cause any amplification.

In the embodiment described, a sample is taken of the pulses of the signal pulse series during the period when the switch is open, in other words, during the period when the phase difference between the two sub-pulses of the signal pulse series propagating in opposite directions is large enough to cause constructive interference at the second port 17. This period, in other words, the size of the transmission window of the switch 11, is determined by the extent of asymmetry of the waveguiding structure 23 which in its turn is determined by the distance d. The transmission window is preferably in the center of the data pulses, rather than at the edges due to the possible presence of time jitter in the data pulses.

Polarization-controlling elements (not shown) may be further incorporated in the waveguiding structure 23 so as to ensure that the sub-signals interfering at the second port 17 have the suitable polarization state for causing constructing interference at a sufficiently large phase difference.

If the semiconductor laser amplifier 25 is an amplifier which is polarization-insensitive, the polarization-controlling elements may be dispensed with.

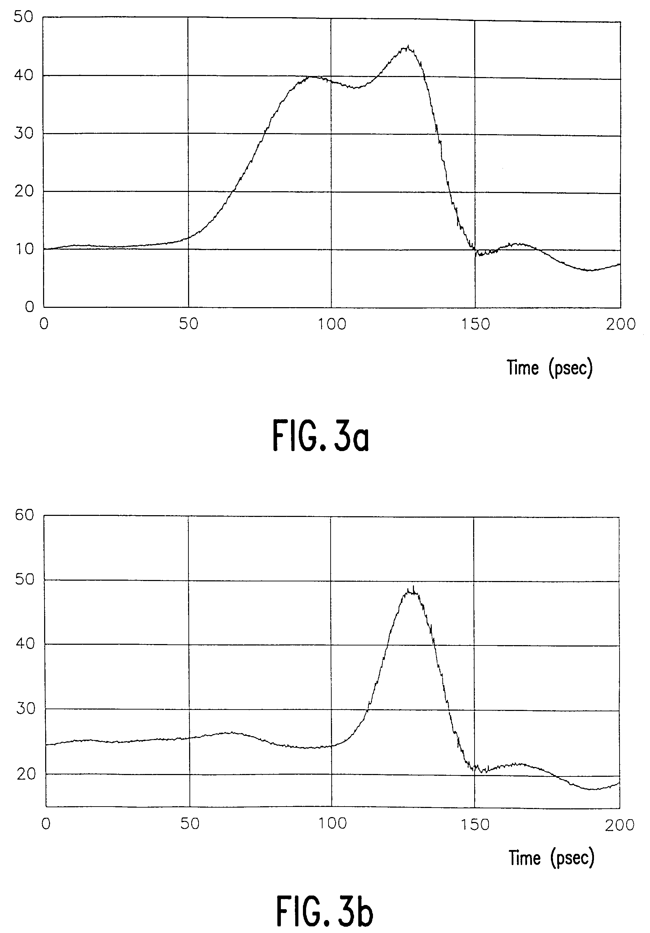

Fig. 3 shows an example of a data pulse which has covered a distance of 150 km through a transmission medium before (a) and after (b) restoration by means of an optical unit according to the invention. Fig. 3a shows a data pulse which has been widened from 20 psec to 80 psec by dispersion after a distance of 150 km. If this pulse is applied to an optical unit according to the invention, a substantially completely restored pulse as shown in Fig. 3b is generated at the output of the unit.

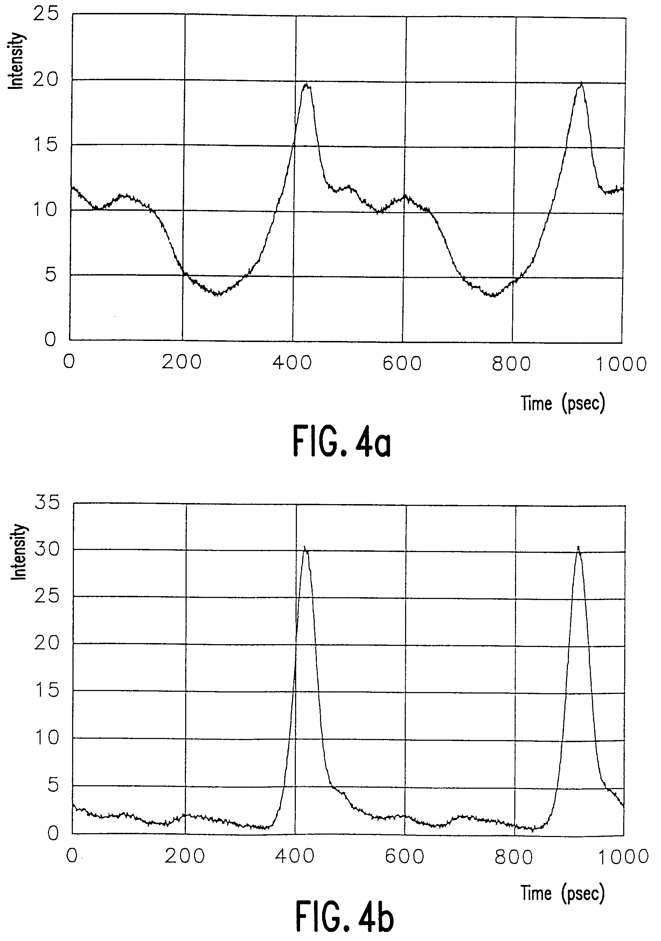

Fig. 4 shows a example in which the optical unit has the function of a format converter. A non-return-to-zero pulse series as shown in Fig. 4a is applied to the unit and converted into a return-to-zero pulse series (Fig. 4b).

The applications, whose results are shown in Figs. 3 and 4, are possible because the switch has the behaviour of a saturated absorber. At a low-intensity level of the data signal, the sub-signal which is the first to arrive in the amplifier will cause a slight change of the charge carrier density so that there will be a relatively small phase difference between the two sub-signals and, consequently, a weak signal will be generated at the second port 17. At a high intensity of the data signal, the power of the signal measured at the second port 17 stabilizes, because on the one hand the power is maximal for a phase difference equal to π. A larger phase difference does not yield any extra power. On the other hand, the amplifier saturates so that the amplification decreases.

The extinction ratio can thus be maintained and even enhanced by using the switch described above. The extinction ratio is the ratio of the light intensity of a digital "1" and the light intensity of a digital "0". In this way, the spontaneous emission can also be eliminated from a signal because it has a much lower intensity than the pulses of the data signal.

## Claims

1. An optical unit for processing a pulse pattern, which unit has an input for receiving a signal pulse series having a modulation period T and means for processing said signal pulse series, characterized in that the means are constituted by a radiation-controlled optical switch comprising a directional coupler having four ports, the first port of which forms part of an input of the switch for receiving the signal pulse series, the second port forms part of an output of the switch, and the third and fourth ports are interconnected by means of a waveguiding structure which is provided with a non-linear optical element situated in the waveguiding structure at such a position that the intensity of a pulse of the signal pulse series realises a non-linear behaviour of the intensity transmission characteristic of the switch during a defined time interval t.

2. An optical unit as claimed in Claim 1, characterized in that the non-linear optical element is situated at a distance d from the center between the input and the output of the switch, for which it holds that T > t.

3. An optical unit as claimed in Claim 1 or 2, characterized in that the non-linear optical element is a semiconductor laser amplifier.

4. An optical unit as claimed in Claim 3, characterized in that the semiconductor laser amplifier is polarization-insensitive.

5. An optical transmission system comprising a transmitter and a receiver with a transmission medium in between, characterized in that the transmission medium is provided with at least one optical unit as claimed in any one of the preceding Claims.

6. A receiver for use in an optical transmission system as claimed in Claim 5, characterized in that the receiver is provided with at least one optical unit as claimed in any one of the preceding Claims.
